# EUROPÄISCHE PATENTANMELDUNG

(11) **EP 0 736 753 A2**
(43) Veröffentlichungstag der Anmeldung: **09.10.1996**
(21) Anmeldenummer: 96104782.6
(22) Anmeldetag: 26.03.1996
(51) Int. Cl.: G01G 17/02, G01G 11/04, A24C 5/34

(54) **Verfahren und Anordnung zum Ermitteln der Masse von stabförmigen Artikeln der tabakverarbeitenden Industrie**

(30) Priorität: 07.04.1995 DE 19513130; 29.11.1995 DE 19544464
(71) Anmelder: Hauni Maschinenbau Aktiengesellschaft, D-21033 Hamburg (DE)
(72) Erfinder: Heitmann, Uwe, 21031 Hamburg (DE); Mörke, Torsten, 23617 Dissau (DE)

(57) **Zusammenfassung**

Die Erfindung betrifft ein Verfahren und eine Anordnung zum Ermitteln der Masse von stabförmigen Artikeln der tabakverarbeitenden Industrie während ihrer Förderung, wobei keine Strahlung, z. B. Beta- oder Röntgenstrahlung, verwendet werden soll.

Die Lösung gemäß der Erfindung besteht darin, daß aus den Artikeln ein mehrlagiger Massenstrom gebildet wird, daß ein definierter Abschnitt des mehrlagigen Massenstromes gewogen wird und daß das Wiegesignal als Meßsignal für die Masse der in dem Abschnitt befindlichen Artikel erfaßt wird.

Der mit der Erfindung verbundene Vorteil besteht darin, daß der Einsatz von Strahlern, die entweder besondere Abschirmmaßnahmen erfordern oder zum Teil ungenau sind, vermieden und auf bekannte und bewährte Wiegeverfahren zurückgegriffen werden kann.

## Beschreibung

Die Erfindung betrifft ein Verfahren zum Ermitteln der Masse von stabförmigen Artikeln der tabakverarbeitenden Industrie während ihrer Förderung.

Die Erfindung betrifft außerdem eine Anordnung zum Ermitteln der Masse von stabförmigen Artikeln der tabakverarbeitenden Industrie während ihrer Förderung.

Unter Artikeln der tabakverarbeitenden Industrie werden insbesondere Zigaretten mit und ohne Filter verstanden. Unter diesem Begriff werden auch Filterstäbe oder Zigarillos verstanden. Bei den Zigaretten kann es sich um stabförmige Gegenstände handeln, deren Rauchmaterial verbrannt wird. Es kann sich aber auch um stabförmige Gegenstände handeln, bei denen lediglich Heißluft erzeugt wird, der Geschmacksstoffe zugesetzt werden.

Durch die US-PS 3 626 953 ist es bekanntgeworden, eine bestimmte Zahl von Zigaretten in Behälter abzufüllen und diese zu verwiegen. Die entsprechenden Meßsignale sind ein Maß für das Mittelgewicht einer größeren Anzahl von Zigaretten.

Die der Erfindung zugrundeliegende Aufgabe besteht darin, eine weitere Art der Bestimmung der Massen von Artikeln der tabakverarbeitenden Industrie vorzusehen.

Nach dem Verfahren gemäß der Erfindung läßt sich dies dadurch erreichen, daß aus den Artikeln ein mehrlagiger Massenstrom gebildet wird, daß ein definierter Abschnitt des mehrlagigen Massenstromes gewogen wird, und daß das Wiegesignal als Meßsignal für die Masse der in dem Abschnitt befindlichen Artikel erfaßt wird.

Weiterbildungen und weitere Ausgestaltungen der Erfindung sind den untergeordneten Verfahrensansprüchen zu entnehmen.

Die obengenannte Anordnung gemäß der Erfindung ist gekennzeichnet durch einen Massenstromförderer für einen aus mehreren Lagen von Artikeln bestehenden Massenstrom und durch eine Wiegevorrichtung für die in einem definierten Abschnitt des Massenstromes geförderten Artikel, wobei das Ausgangssignal der Wiegevorrichtung ein Maß für die Masse der Artikel in dem definierten Abschnitt darstellt.

Weitere Ausgestaltungen der Erfindung sind den untergeordneten Vorrichtungsansprüchen zu entnehmen.

Der mit der Erfindung verbundene Vorteil besteht darin, daß der Einsatz von Strahlern, die entweder besondere Abschirmmaßnahmen verlangen, wie Beta- oder Röntgenstrahler, oder ungenau sind, vermieden und auf bekannte und bewährte Wiegeverfahren zurückgegriffen werden kann. Verfahren und Anordnung nach der Erfindung gewährleisten eine hohe Meßgenauigkeit und weitgehende Unabhängigkeit der Meßergebnisse von der Höhe und der Dichte des Massenstromes. Dabei kann mit großer Zuverlässigkeit auch das mittlere Gewicht der einzelnen im Massenstrom enthaltenen Artikel bestimmt werden. Ein weiterer Vorteil besteht darin, daß die Wiegevorrichtungen auf einfache Weise in übliche Massenstromförderstrecken eingebaut werden können, daß vorhandene Einrichtungen also nachgerüstet werden können.

Die Erfindung wird anhand von Ausführungsbespielen näher erläutert.

Es zeigen:
- Figur 1: eine als Bandwaage ausgebildete Wiegevorrichtung für in einem Abschnitt eines Massenstromes geförderte Artikel in einer Seitenansicht,
- Figur 2: eine Draufsicht auf eine Wiegevorrichtung gemäß Figur 1 ohne Artikel,
- Figur 3: eine als stationäre Waage ausgebildete Wiegevorrichtung für in einem Abschnitt eines Massenstromes geförderte Artikel in einer Seitenansicht,
- Figur 4: eine Draufsicht auf eine Wiegevorrichtung gemäß Figur 3 ohne Artikel,
- Figur 5: eine Anordnung mit zwei spiegelbildlich orientierten Wiegevorrichtungen für in einem Abschnitt eines Massenstromes geförderte Artikel in einer Seitenansicht,
- Figur 6: eine Schnittansicht entlang der Linie A-A der Figur 5 und
- Figur 7: eine Draufsicht auf die Anordnung entlang der Linie B-B der Figur 5.

In einer Massenstrombildezone 1 wird aus einer Reihe einzelner stabförmige Artikel 2, die von über Rollen 3, 4 geführten entsprechend den Pfeilen angetriebenen Förderbändern 6 bzw. 7 zugefördert werden, ein Artikel-Massenstrom 8 auf einem entsprechend dem Pfeil angetriebenen über Rollen 9, 11 geführten Förderband 12 gebildet. 13 ist ein Gewebe, das in der Massenstrombildezone 1 auf den Artikeln 2 ruht. Die Artikel können Zigaretten mit oder ohne Filter, Filterstäbe, Zigarillos oder dergleichen sein. Der Massenstrom 8 besteht aus mehreren übereinander angeordneten Reihen/Lagen von Artikeln, in dem Beispiel aus fünf, wobei die Artikel einer oberen Reihe zwischen den Artikeln der jeweils darunterliegenden Reihe, also "auf Lücke", liegen. Die oberste Reihe ist mit 14 bezeichnet. Die Bildung des Massenstromes 8 erfolgt in bekannter Weise derart, daß gleiche Volumina des Massenstromes die gleiche Anzahl von Artikeln 2 enthalten.

Im Anschluß an das Förderband 12 wird der Massenstrom 8 mittels über die Rolle 9 geführter, entsprechend den Pfeilen angetriebener Bänder 18 bzw. 19 einer Bandwaage 21 geführt. Die Bänder 18, 19 sind außerdem über eine Rolle 24 geführt, über die ein weiteres, den Abtransport des Massenstromes 8 bewirkendes entsprechend den Pfeilen angetriebenes Förderband 26 geführt ist.

Die Bänder 18, 19 der schematisch dargestellten Bandwaage 21 sind unter dem Gewicht der in einem definierten Abschnitt 28 des Massenstromes befindlichen Zahl von Artikeln geringfügig um eine Schwenkachse 27 der Rolle 9 mehr oder weniger schwenkbar. Die von dem Gewicht der Artikel in dem definierten Abschnitt 28 abhängigen Ausschläge erfaßt ein Aufnehmer 29 der Bandwaage 21 und gibt - eventuell nach Verstärkung - ein entsprechendes Signal an eine Rechenanordnung 31. Dieser werden außerdem Signale einer Lichtschrankenanordnung 32, bestehend aus Lichtquelle 33 und lichtelektrischem Empfänger 34 zugeführt. Über diese Signale wird die Anzahl der in dem definierten Abschnitt 28 des Massenstromes 8, der der wirksamen Länge der Bandwaage 21 entspricht, befindlichen Artikel bestimmt. Die Rechenanordnung 31 kann also über das Gesamtgewicht und die Anzahl der in dem Abschnitt 28 befindlichen Artikel auf das Gewicht/Masse eines einzelnen Artikels, z. B. einer Zigarette oder einem Filterstab, schließen und an Ausgang 35 ein entsprechendes elektrisches Meßsignal abgeben. Ist die Anzahl der Artikel in dem Abschnitt 28 konstant, so braucht nur ein dem Mittelgewicht entsprechendes Meßsignal an Ausgang 35 der Rechenanordnung 31 abgegeben zu werden. Die Signale an dem Ausgang 35 können zu Meß- und Steuerzwecken verwendet werden. So kann z. B. bei als Zigaretten ausgebildeten Artikeln die Masse des in einer Zigarettenstrangmaschine gebildeten Tabakstranges durch Steuerung der Tabakzufuhr zu der Strangbildung oder der Abnahme von überschüssigem Tabak vom gebildeten Tabakstrang durch einen sogenannten Egalisator gesteuert werden. Bei als Filterstäbe ausgebildeten Artikeln kann die Zufuhr von Filtermaterial zur Strangbildung gesteuert werden.

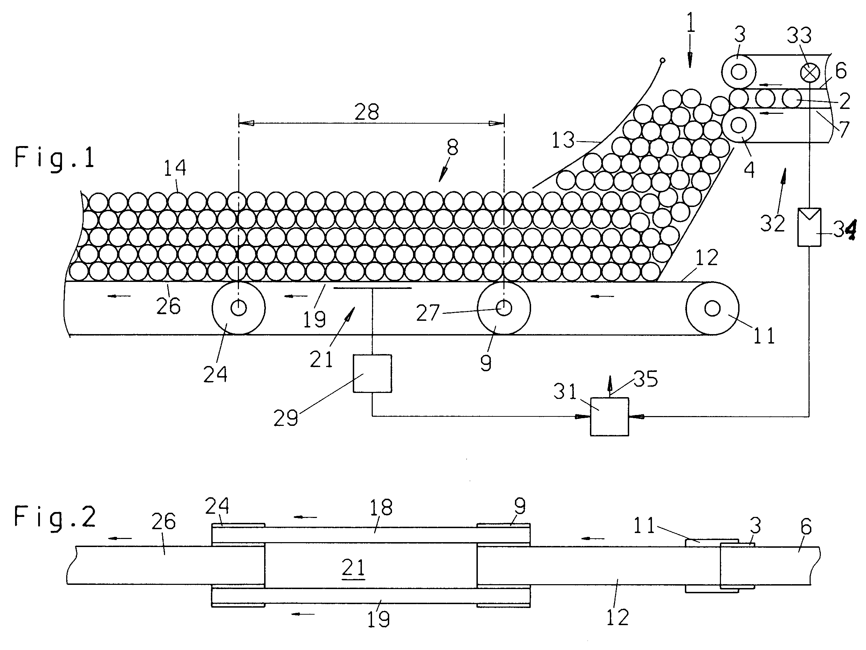

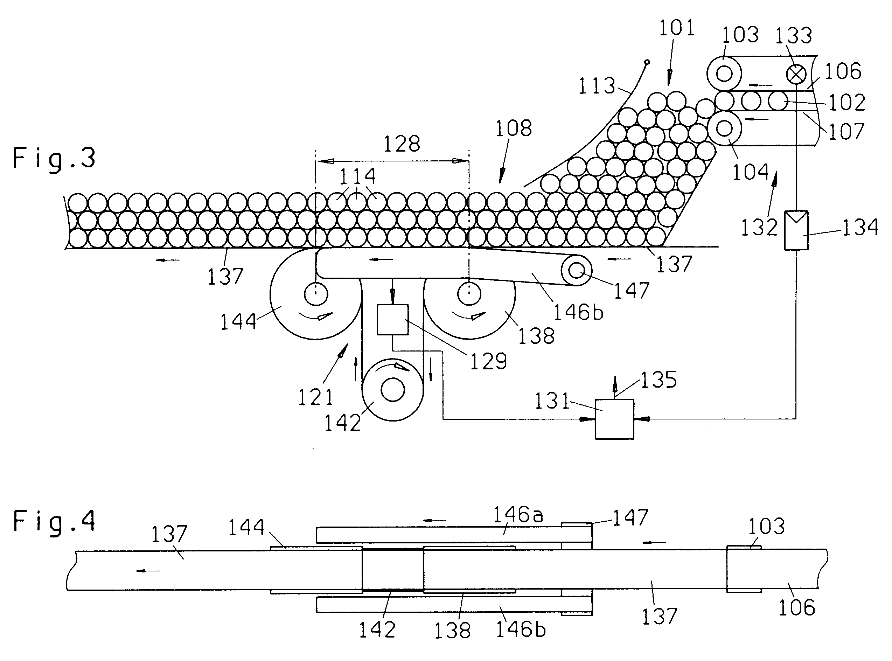

Die in den Figuren 3 und 4 beschriebene Meßanordnung unterscheidet sich von derjenigen der Figuren 1 und 2 dadurch, daß keine Bandwaage, sondern eine stationäre Waage 121 vorgesehen ist. Hierzu wird in dem definierten Abschnitt 128 das angetriebene Förderband 137, das über eine Rolle 138 geführt ist, aus der Horizontalen nach unten abgelenkt. Es wird sodann über eine Rolle 142 nach oben umgelenkt und von einer Rolle 144 wieder in die Horizontale abgelenkt. In dem Freiraum 128 außerhalb der Rollen 138 und 144 befinden sich Arme 146a, 146b der stationären Waage 121, die um die Schwenkachse 147 schwenkbar gelagert sind. Der vom Gewicht der in dem definierten Abschnitt 128 befindlichen Artikel abhängige Schwenkweg kann sehr klein sein und wird von einem Aufnehmer 129 abgetastet, der ein entsprechendes elektrisches Ausgangssignal an eine Rechenanordnung 131 abgibt. Diese erhält zusätzlich wieder Signale von einer Lichtschranke 132, bestehend aus Lichtquelle 133 und lichtelektrischem Empfänger 134, zum Erfassen der Anzahl der der Massenstrombildezone 101 zugeführten Artikel 102, so daß an ihrem Ausgang 135 wieder ein dem Gewicht/Masse der Artikel in dem Abschnitt 128 des hier dreireihigen Massenstromes 108 entsprechendes Signal oder, nach Umwandlung, ein einem einzelnen Artikel entsprechendes Signal abgegeben wird. Als stationäre Waage 121 eignet sich auch eine Waage, die wegelos mißt, d. h. deren Aufnehmer 129 die Gewichtskraft der auf den Arm 146 wirkenden Masse erfaßt, ohne eine nennenswerte Bewegung auszuführen.

Die Positionen 103, 104, 106, 107, 113 und 114 entsprechen den in den Figuren 1 und 2 beschriebenen um 100 verminderten Positionen, so daß sie nicht mehr besonders erläutert werden müssen.

Im Gegensatz zu der Ausführungsform der Figuren 1 und 2, in denen die Bänder 18, 19 der Bandwaage 21 eine aktive Förderung des Massenstromes 8 übernehmen, wird der Massenstrom 108 von den Fördergurten 136 und 137 über die Arme 146 der stationären Waage 121 geschoben.

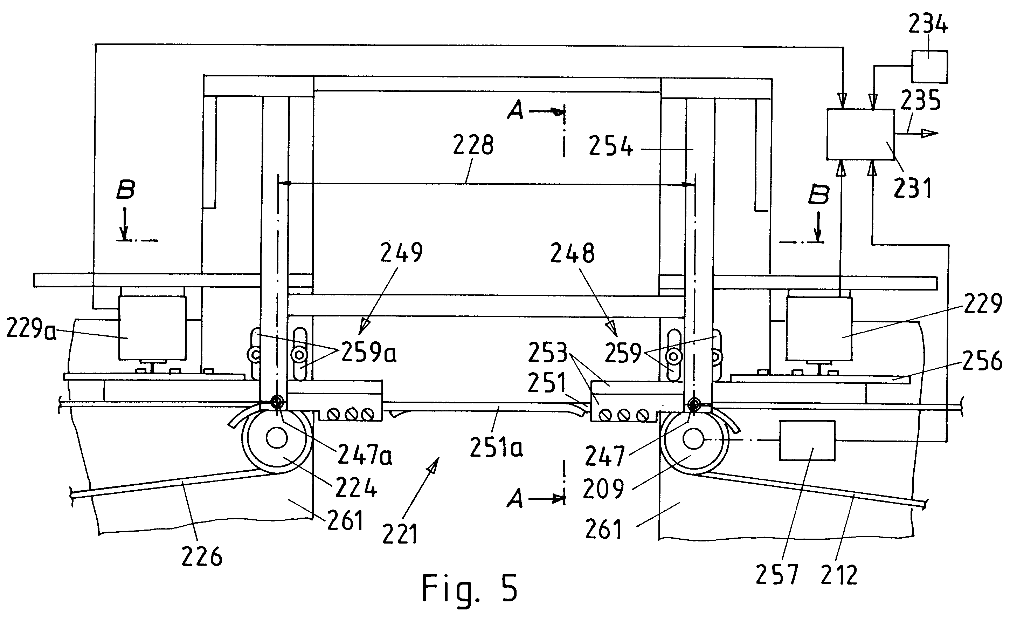

Die Figuren 5 bis 7 zeigen in verschiedenen Ansichten ein weiteres, derzeit bevorzugtes Ausführungsbeispiel der Erfindung. Gleiche Teile sind mit denselben Bezugszeichen versehen wie in den Figuren 1 und 2 bzw. 3 und 4, jeweils vermehrt um 200 bzw. 100.

Auch in diesen Figuren ist der für das Verständnis der Erfindung relevante Abschnitt einer Massenstromförderstrecke für stabförmige Artikel der tabakverarbeitenden Industrie dargestellt, der von mit Abstand aufeinanderfolgenden Förderbändern 212 und 226 und einer zwischen den Bändern angeordneten Waage 221 gebildet ist. Die Zuführung der Artikel zur Förderstrecke und die Bildung eines Massenstromes sind wie dieser selbst hier nicht dargestellt. Diesbezüglich kann auf die Figuren 1 und 3 verwiesen werden, wo die Einzelheiten der Massenstrombildung in der Massenstrombildezone 1 bzw. 101 gezeigt sind.

Die Wiegevorrichtung 221 besteht hier aus zwei nahezu identisch aufgebauten Waagen 248 und 249, die spiegelbildlich zueinander aufgebaut sind. Die Waagen sind als stationäre Balkenwaagen mit Wägebalken 251 bzw. 251a ausgebildet, die sich im Förderstreckenabschnitt zwischen den Bändern 212 und 226 teilweise überlappen und so den Massenstrom gemeinsam tragen. Wenigstens für die den Massenstrom tragenden Abschnitte der Wägebalken 251 und 251a sind Rundstangen oder Rohrstücke mit kleinem Durchmesser und reibungsarmer Oberfläche vorgesehen, um die Reibung zwischen dem bewegten Massenstrom und den stationären Balken zu minimieren. Es sei darauf hingewiesen, daß die Wägebalken, was hier nicht dargestellt ist, auch mit umlaufenden Bändern ausgestattet sein können, was die Reibung völlig ausschaltet, aber höheren mechanischen Aufwand erfordert.

Da die Waagen 248, 249 spiegelbildlich gleich aufgebaut sind, genügt es, eine von ihnen näher zu beschreiben, was dann entsprechend auch für die andere gilt. Gleiche Teile der zweiten Waage sind in den Figuren 5 bis 7 mit denselben Bezugszeichen versehen wie die der ersten, jeweils ergänzt durch Hinzufügen eines "a".

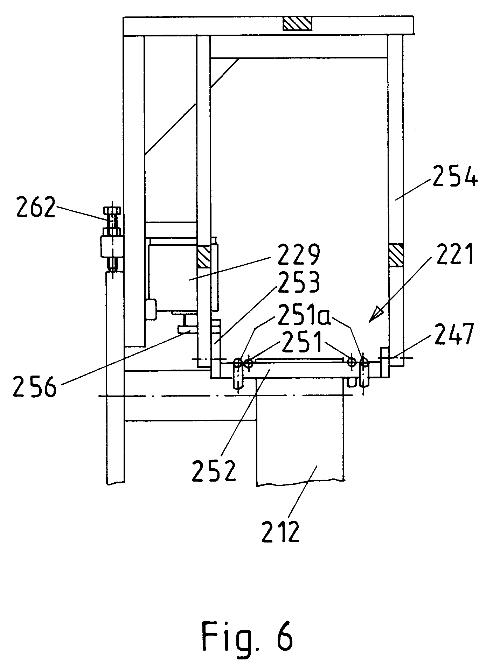

Die Wägebalken 251 der Waage 248 sind an einem Querträger 252 angebracht, der seinerseits an einem Gestänge 253 befestigt ist. Über den Querträger 252 und das Gestänge 253 sind die Wägebalken 251 um eine Achse 247 schwenkbar an einem Rahmen 254 angelenkt. Wie speziell die Figur 6 erkennen läßt, verläuft diese Schwenkachse 247 quer zur Förderrichtung des Massenstroms in dessen Förderebene, also in der Ebene, die durch die Oberfläche des Fördertrums des Bandes 212 und die Auflage der Wägebalken 251 definiert ist. Diese Anordnung der Schwenkachse 247 bewirkt, daß die Reibungskräfte, die zwischen dem bewegten Massenstrom und den stationären Wägebalken entstehen, nicht zu einem die Wägebalken auslenkenden Moment führen, so daß das Wägeergebnis von derartigen Reibungseinflüssen frei ist.

Über das Gestänge 253 wird ein auf die Wägebalken 251 wirkender Druck auf eine am Gestänge angebrachte Kontaktplatte 256 und durch diese auf einen Aufnehmer 229 übertragen, der am Rahmen 254 angebracht ist und der ein dem Gewicht eines auf den Wägebalken 251 lastenden Massenstroms entsprechendes Wiegesignal erzeugt und an eine Rechenanordnung 231 abgibt. Die Wägebalken 251, der Querträger 252, das Gestänge 253 und die Kontaktplatte 256 bilden also eine starre, um die Achse 247 schwenkbare Einheit, die die Gewichtskraft des auf den Wägebalken befindlichen Massenstromabschnitts auf den Aufnehmer 229 überträgt. Dabei sei darauf hingewiesen, daß die Waage höchstens mit ganz geringen Auslenkungen der Wägebalken arbeitet, die den Vorschub des Massenstroms nicht behindern und seine Konfiguration nicht ändern. Auch eine Waage, die wegelos mißt, deren Aufnehmer 229 die wirkende Gewichtskraft ohne Auslenkung erfaßt, kann hier eingesetzt werden.

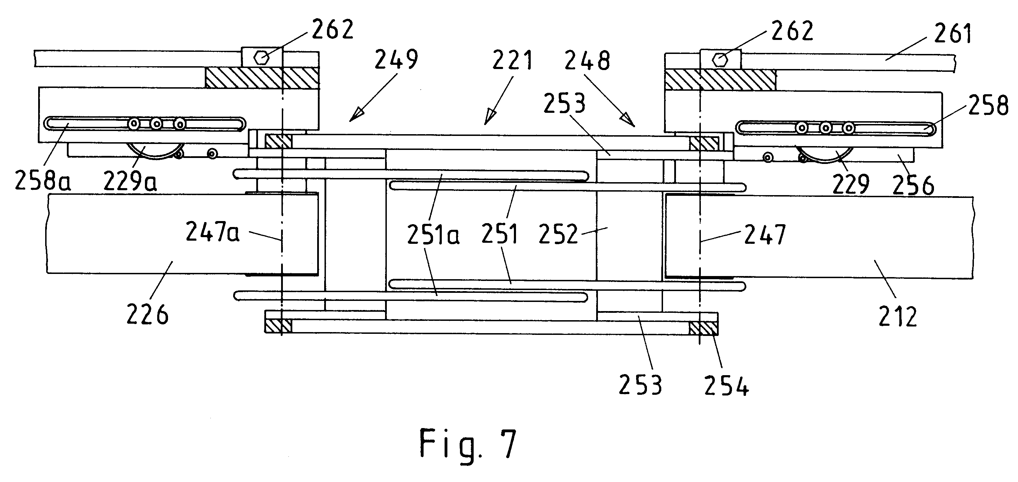

Die Figuren 5 und 7 zeigen, daß die zweite Waage 249 in demselben Rahmen 254 spiegelbildlich zur ersten Waage angeordnet ist, wobei sich die Wägebalken 251 bzw. 251a der beiden Waagen zueinander seitlich versetzt überlappen, wie das die Figur 7 zeigt. Der Aufnehmer 229a der zweiten Waage 249 ist ausgangsseitig ebenfalls an die Rechenanordnung 231 angeschlossen.

Die Rechenanordnung 231 verknüpft die Wiegesignale der beiden Aufnehmer 229 und 229a zu einem Meßsignal, welches das Gewicht bzw. die Masse der im definierten Massenstromabschnitt 228 enthaltenen Artikel repräsentiert. Dabei kann schon die Addition der Wiegesignale der beiden Aufnehmer 229 und 229a zu einem Meßsignal führen, das das Gewicht bzw. die Masse des Massenstromabschnitts 228 unabhängig von störenden Krafteinflüssen benachbarter, außerhalb des Massenstromabschnitts 228 befindlicher Artikel darstellt. Dadurch wird das Meßsignal unabhängig von der Höhe des Massenstroms, weil die Krafteinflüsse, die Artikel in den Randbereichen außerhalb des definierten Massenstromabschnitts auf das Wiegeergebnis ausüben und die mit der Höhe des Massenstroms zunehmen, durch die zweimalige Wägung mit entgegengesetzt orientierten Balkenwaagen eliminiert werden. So stellt das aus den beiden Wiegesignalen der Aufnehmer 229 und 229a gewonnene Meßsignal tatsächlich ein sehr genaues Maß für die Masse des Massenstromabschnitts 228 dar.

Um eine Aussage über die Masse einzelner Artikel im Massenstromabschnitt 228 zu gewinnen, wird außerdem die Anzahl der im Massenstromabschnitt enthaltenen Artikel erfaßt und in der Rechenanordnung 231 mit dem Meßsignal der Masse verrechnet. Dazu wird, wie im Zusammenhang mit den Figuren 1 und 3 beschrieben, mit einem Aufnehmer 234 die Anzahl der pro Zeiteinheit zur Massenstrombildezone zugeführten Artikel erfaßt und gleichzeitig mit einem Geschwindigkeitsaufnehmer 257 die Fördergeschwindigkeit des Massenstromabschnitts 228 bestimmt. Beide Werte ergeben ein Maß für die Anzahl der im Massenstromabschnitt 228 enthaltenen Artikel und werden in der Rechenanordnung 231 mit dem Meßsignal für die Masse zu einem Mittelgewichtssignal 235 verarbeitet, welches das mittlere Gewicht der einzelnen im Massenstromabschnitt 228 enthaltenen Artikel repräsentiert. Das Mittelgewichtsignal 235 kann, wie oben bereits beschrieben, für eine Anzeige und/oder für Steuermaßnahmen verwendet werden.

Der Geschwindigkeitssensor 257 erfaßt die Bahngeschwindigkeit des Förderbandes 212, welches den Massenstrom zu der Wiegeeinrichtung 221 fördert. Um den Fehler durch Schlupf zwischen dem Förderband 212 und dem Massenstrom auszuschalten, kann auch, beispielsweise mit optischen Mitteln, die Fördergeschwindigkeit des Massenstroms selbst erfaßt und wie das Signal des Geschwindigkeitsaufnehmers 257 in der Rechenanordnung 231 verarbeitet werden.

Zur Beeinflussung der Empfindlichkeit der Waagen und zur Abstimmung der Waagen aufeinander können deren Aufnehmer 229 und 229a in Langlöchern 258 und 258a parallel zum Massenstrom verschoben werden. Der die Waagen tragende Rahmen 254 kann in Langlöchern 259 und 259a vertikal am Maschinengestell 261 verschoben werden. Mit Stellschrauben 262 ist eine Feineinstellung der Höhe des Rahmens 254 möglich, mit der die Wägebalken 251 und 251a mit den Bändern 212 und 226 auf genau gleiche Höhe gebracht werden können.

## Patentansprüche

1. Verfahren zum Ermitteln der Masse von stabförmigen Artikeln der tabakverarbeitenden Industrie während ihrer Förderung, dadurch gekennzeichnet, daß aus den Artikeln ein mehrlagiger Massenstrom gebildet wird, daß ein definierter Abschnitt des mehrlagigen Massenstromes gewogen wird, und daß das Wiegesignal als Meßsignal für die Masse der in dem Abschnitt befindlichen Artikel erfaßt wird.

2. Verfahren nach Anspruch 1, dadurch gekennzeichnet, daß ein Massenstromabschnitt wenigstens zweimal gewogen wird und zwei entsprechende Wiegesignale gebildet werden und daß die Wiegesignale zu einem die Masse der in dem Abschnitt befindlichen Artikel repräsentierenden Meßsignal verarbeitet werden.

3. Verfahren nach Anspurch 2, dadurch gekennzeichnet, daß die wenigstens zwei Wägungen der Massenstromabschnitte derart ausgeführt werden, daß im Massenstrom auftretende störende Kraftwirkungen in den Wägesignalen unterschiedlich erfaßt und durch die Verarbeitung der Wiegesignale zu einem Meßsignal eliminiert werden.

4. Verfahren nach Anspruch 2 oder 3, dadurch gekennzeichnet, daß die wenigstens zwei Wägungen des Massenstromabschnitts in einem Förderwegabschnitt gleichzeitig durchgeführt werden.

5. Verfahren nach einem der Ansprüche 1 bis 4, dadurch gekennzeichnet, daß ein mehrlagiger Massenstrom aus einer definierten Zahl übereinanderliegender Artikelreihen gebildet wird und daß die Zahl der zur Bildung des Massenstromes zugeführten Artikel erfaßt und in Beziehung zu dem Meßsignal für die Masse der in dem definierten Abschnitt geförderten und gewogenen Artikel gesetzt wird.

6. Verfahren nach einem der Ansprüche 1 bis 5, dadurch gekennzeichnet, daß die Zahl der pro Zeiteinheit zur Bildung des Massenstroms zugeführten Artikel erfaßt und ein entsprechendes Mengensignal gebildet wird, daß die Fördergeschwindigkeit des Massenstromabschnitts gemessen und ein entsprechendes Geschwindigkeitssignal erzeugt wird und daß das Mengensignal, das Geschwindigkeitssignal und das Meßsignal zu einem die mittlere Masse der im Massenstromabschnitt enthaltenen Artikel repräsentierenden Mittelgewichtssignal verarbeitet werden.

7. Verfahren nach einem der Ansprüche 1 bis 6, dadurch gekennzeichnet, daß die Artikel in dem definierten Abschnitt des Massenstromes mittels wenigstens einer Bandwaage gefördert und dabei gewogen werden.

8. Verfahren nach einem der Ansprüche 1 bis 6, dadurch gekennzeichnet, daß die Artikel in dem definierten Abschnitt über wenigstens eine feststehende Waage geschoben und dabei gewogen werden.

9. Anordnung zum Ermitteln der Masse von stabförmigen Artikeln der tabakverarbeitenden Industrie während ihrer Förderung, gekennzeichnet durch einen Massenstromförderer (12, 18, 19, 26; 137; 212, 226) für einen aus mehreren Lagen von Artikeln (2, 102) bestehenden Massenstrom (8, 108) und durch wenigstens eine Wiegevorrichtung (21, 121, 221) für die in einem definierten Abschnitt (28, 128, 228) des Massenstromes geförderten Artikel, wobei das Ausgangssignal (35, 135, 235) der Wiegevorrichtung ein Maß für die Masse der Artikel in dem definierten Abschnitt darstellt.

10. Anordnung nach Anspruch 9, gekennzeichnet durch eine den Massenstrom (8) fördernde und die in dem definierten Abschnitt (28) befindlichen Artikel wiegende Bandwaage (21) als Wiegevorrichtung.

11. Anordnung nach Anspruch 9, gekennzeichnet durch eine die in dem definierten Abschnitt (128, 228) des Massenstromes (108) befindlichen Artikel wiegende stationäre Waage (121), über die der Massenstrom geschoben wird.

12. Anordnung nach einem der Ansprüche 9 bis 11, dadurch gekennzeichnet, daß wenigstens zwei Wiegevorrichtungen (248, 249) zum Erfassen der Masse der im Massenstromabschnitt (228) enthaltenen Artikel und zum Bilden von je einem Wiegesignal vorgesehen sind.

13. Anordnung nach einem der Ansprüche 9 bis 12, dadurch gekennzeichnet, daß die Wiegevorrichtungen (248, 249) an eine die Wiegesignale zu einem die Masse der Artikel in dem Massenstromabschnitt (228) repräsentierenden Meßsignal verarbeitende Rechenanordnung (231) angeschlossen sind.

14. Anordnung nach einem der Ansprüche 9 oder 11 bis 13, dadurch gekennzeichnet, daß die Wiegevorrichtungen (248, 249) in der Förderebene des Massenstroms entgegengesetzt verlaufende, den Massenstromabschnitt (228) tragende Wägebalken (251, 251a) aufweisen.

15. Anordnung nach Anspruch 14, dadurch gekennzeichnet, daß die Wägebalken (251, 251a) an im wesentlichen in der Förderebene des Massenstroms quer zu dessen Förderrichtung verlaufenden Achsen (247, 247a) angelenkt sind.

16. Anordnung nach Anspruch 14 oder 15, dadurch gekennzeichnet, daß die den Massenstromabschnitt (228) tragenden Wägebalken (251, 251a) einander freitragend auf im wesentlichen gleichem Niveau aus entgegengesetzten Richtungen seitlich versetzt überlappen.

17. Anordnung nach einem der Ansprüche 9 bis 16, gekennzeichnet durch eine Zählvorrichtung (32, 132; 234) für die zum Bilden (1, 101) des Massenstromes (8, 108) zugeführten Artikel (2, 102), die mit einer Rechenanordnung (31, 131, 232) verbunden ist, der außerdem das Ausgangssignal der Wiegevorrichtung (21, 121, 221) zugeführt ist.

18. Anordnung nach einem der Ansprüche 9 bis 17, dadurch gekennzeichnet, daß sie eine Einrichtung (234, 257, 231) zum Bestimmen der Anzahl von Artikeln im Massenstromabschnitt (228) aufweist, welche zusammen mit den Aufnehmern (229, 229a) der Wiegevorrichtungen (248, 249) an eine Rechenanordnung (231) angeschlossen ist.

19. Anordnung nach einem der Ansprüche 9 bis 18, dadurch gekennzeichnet, daß eine Zählvorrichtung (32, 132, 234) zum Zählen der pro Zeiteinheit für die Bildung des Massenstroms (8, 108) zugeführten Artikel (2, 102) und zum Erzeugen eines entsprechenden Mengensignals und eine Meßvorrichtung (257) zum Erfassen der Fördergeschwindigkeit des Massenstromabschnitts (28, 128, 228) und zum Erzeugen eines entsprechenden Geschwindigkeitssignals vorgesehen sind, daß die Zählvorrichtung und die Meßvorrichtung zusammen mit den Aufnehmern (29, 129, 229, 229a) der Wiegevorrichtungen (248, 49) an eine das Meßsignal, das Geschwindigkeitssignal und das Mengensignal zu einem die mittlere Masse der einzelnen Artikel im Massenstromabschnitt repräsentierenden Gewichtsmittelwertsignal verarbeitende Rechenanordnung (231) angeschlossen sind.
